# EUROPÄISCHE PATENTSCHRIFT

(11) **EP 3 245 265 B1**
(45) Veröffentlichungstag und Bekanntmachung des Hinweises auf die Patenterteilung: **22.07.2020**
(21) Anmeldenummer: 16708597.6
(22) Anmeldetag: 13.01.2016
(51) Int. Cl.: C09J 7/21, C09J 7/29

(54) **KLEBEBAND, INSBESONDERE WICKELBAND**
ADHESIVE TAPE, PARTICULARLY WRAPPING TAPE
BANDE ADHÉSIVE, NOTAMMENT UNE BANDE ENVELOPPANTE

(30) Priorität: 13.01.2015 DE 202015100125 U
(43) Veröffentlichungstag der Anmeldung: 22.11.2017
(73) Patentinhaber: certoplast Technische Klebebänder GmbH, 42285 Wuppertal (DE)
(72) Erfinder: LEERMANN, Timo, 42285 Wuppertal (DE)
(74) Vertreter: Nunnenkamp, Jörg
(86) Internationale Anmeldenummer: PCT/EP2016/000046
(87) Internationale Veröffentlichungsnummer: WO 2016/113132

(56) Entgegenhaltungen:
- WO-A1-03/043814
- DE-U1-202010 016 142
- US-A1- 2007 098 955
- US-A1- 2013 189 500

## Beschreibung

Die Erfindung betrifft die Kombination aus einem Klebeband zum Bandagieren langgestreckter Objekte und dem betreffenden Objekt, gemäß Anspruch 1, wobei das Klebeband mit einem Träger, ferner mit einer ein- oder beidseitig aufgebrachten Kleberbeschichtung, und mit einer Markierung ausgerüstet ist.

Ein Klebeband und insbesondere Wickelband zum Bandagieren langgestreckter Objekte wie beispielsweise von Kabelbündeln in Automobilen wird unter anderem in dem Gebrauchsmuster DE 94 00 574 U1 im Detail beschrieben. Dort erkennt man auch anhand der Fig. 4 wie ein Leitungssatz bzw. Kabelbündel mit dem beschriebenen Klebeband umwickelt wird respektive umwickelt werden kann. Tatsächlich erfolgt dieser Vorgang heutzutage und nach wie vor manuell, weil die zusammenzufassenden Kabelbündel zum Einsatz in einem Automobil letztlich Unikate darstellen. Das lässt sich auf die unterschiedlichen Ausstattungsvarianten, verschiedene Ausprägungen für das Aus- und Inland etc. zurückführen.

Bei diesem Wickelvorgang wird typischerweise so vorgegangen, dass das Klebeband wendeiförmig um das Kabelbündel im Beispielfall herumgeführt wird. Dabei wird ein Folgewickel auf einen vorauslaufenden bzw. vorauseilenden Wickel mit einem bestimmten und letztlich frei wählbaren Überlapp aufgeklebt. Diesen Überlapp gibt letztendlich der Montagewerker aufgrund eigener oder fremder Erfahrungen vor. Als Folge hiervon beobachtet man in der Praxis unterschiedlich ausgeprägte Überlappe, wechselnde Überlappe etc.

Die in diesem Kontext eingesetzten Klebebänder und insbesondere Wickelbänder zum Bandagieren von Kabelbündeln in Automobilen müssen unterschiedlichen Anforderungen genügen. So kommt es unter anderem darauf an, dass diese unempfindlich gegenüber Kraftstoffen, Ölen oder vergleichbaren Medien gestaltet sind. Darüber hinaus will man mit solchen Klebebändern die Geräuschentwicklung eines Kabelsatzes bzw. Kabelbündels positiv beeinflussen und insbesondere Klappergeräusche möglichst effektiv akustisch dämpfen.

Hierzu schlägt der Stand der Technik entsprechend der EP 1 754 764 B1 ein Klebeband vor, welches mit einen textilen Träger aus zumindest einer Gewebeschicht und einer damit verbundenen Flächengebildeschicht ausgerüstet ist. Als Folge hiervor steigen naturgemäß die Herstellungskosten solcher Klebebänder.

Aus diesem Grund ist man einerseits bestrebt, die Produktionskosten für das verwendete Klebeband so niedrig wie möglich einzustellen. Andererseits wird versucht, den Vorgang der Kabelsatzherstellung und insbesondere das Bandagieren der Kabelbündel im Beispielfall zu verbessern. Allerdings existieren an dieser Stelle bisher keine überzeugenden Ansätze. Zwar beschreibt der gattungsbildende Stand der Technik nach der DE 20 2010 016 142 U1 ein Klebeband, welches zusätzlich mit einer Markierung ausgerüstet ist. Allerdings ist das bekannte Klebeband nur einseitig mit einer Klebeschicht und auch nur zum Teil in Bezug auf seine Breite mit der fraglichen Klebeschicht ausgerüstet.

Im nächstkommenden Stand der Technik nach der DE 20 2010 016 142 U1 wird ein Klebeband beschrieben, welches zum Umwickeln von Gegenständen und/oder Kabelsträngen oder Leitungen eingesetzt wird. Dazu ist das Klebeband wenigstens einseitig sowie nur zu einem Teil seiner Breite mit einer Klebeschicht ausgerüstet. Das Klebeband selbst kann als Gewebeband ausgebildet sein. Außerdem ist eine Markierung vorgesehen, welche die Breite des Klebestreifens auf der gegenüberliegenden Seite kennzeichnet.

Hierdurch soll eine genaue Positionierung des Klebestreifens bei jeder Umwicklung ermöglicht werden. Bei der Umwicklung wird das Klebeband um den länglichen Gegenstand spiralförmig herumgewickelt. Es wird insgesamt eine rohrförmige Umhüllung für das Kabel zur Verfügung gestellt, welche lediglich an den Enden mit den Klebeflächen fixiert ist.

Auf diese Weise werden zwar die Herstellungskosten positiv beeinflusst, einfach weil Kleber gespart wird. Allerdings ist der solchermaßen hergestellte Wickel bzw. die aus den Wickeln aufgebaute Bandage nicht (mehr) in der Lage, die einzelnen Kabel des Kabelbündels tatsächlich einwandfrei zu fixieren und sicher gegeneinander zu halten. Vielmehr wird ausdrücklich so gearbeitet, dass der Kabelstrang zwar umschlossen und folglich ausreichend gegen äußere Einflüsse geschützt, jedoch nicht mit einer sich möglicherweise versteifenden Klebermasse verbunden wird.

Zwar mag hierdurch die Flexibilität des Kabelstranges oder Kabelbaumes insgesamt gesteigert werden, allerdings besteht bei einer solchen gleichsam losen Umhüllung die Gefahr, dass diese gegenüber dem Kabelbündel verschoben wird oder gänzlich vom umwickelten Kabelbündel abreißt oder abgestreift wird. Außerdem lassen sich hierdurch beispielsweise schallisolierende Maßnahmen und eine entsprechende schallisolierende Ausrüstung des Klebebandes nicht wirksam umsetzten.

Denn dies setzt letztlich einen festen Verbund des Klebebandes mit dem umwickelten Kabelbündel voraus, um die geforderte geräuschabsorbierende Wirkung zur Verfügung stellen zu können. - Jede Beabstandung oder gar lose Umhüllung des Klebebandes im Vergleich zum umwickelten Kabelbündel führt jedoch dazu, dass Klappergeräusche des solchermaßen ausgerüsteten Kabelbündels bzw. Kabelstranges nicht oder jedenfalls nicht wirksam beherrscht werden können. Außerdem ist eine solche lose Umhüllung kaum in der Lage, den entsprechend ausgerüsteten Kabelsatz bzw. das Kabelbündel mechanisch vor beispielsweise Scheuerbeanspruchungen, scharfen Kanten etc. zu schützen (vgl. DE 20 2010 016 142 U1). Hier will die Erfindung insgesamt Abhilfe schaffen.

Der Erfindung liegt das technische Problem zugrunde, eine derartige Kombination aus einem Klebeband und dem betreffenden langgestreckten Objekt so weiter zu entwickeln, dass die besondere Eignung als Wickelband zum Bandagieren von Kabelbündeln in Automobilen erhalten bleibt und zugleich bei der Verarbeitung Kostenvorteile beobachtet werden.

Zur Lösung dieser technischen Problemstellung ist eine gattungsgemäße Kombination im Rahmen der Erfindung dadurch gekennzeichnet, dass die Markierung als Positionierhilfe beim Bandagieren ausgebildet ist, und zwar derart, dass auf einen jeweils am Objekt festgeklebten vorauseilenden Wickel ein Folgewickel mit durch die Positionierhilfe vorgegebener Überlappung aufgeklebt wird, wobei der Träger vollflächig mit der Kleberbeschichtung ausgerüstet ist oder die Kleberbeschichtung als Streifen auf den Träger aufgebracht wird, solange gewährleistet ist, dass die einzelnen Wickel am Objekt festgeklebt werden.

Das erfindungsgemäße Klebeband wird dementsprechend spiralförmig bzw. wendeiförmig um das langgestreckte Objekt bzw. vorzugsweise die Kabelbündel in Automobilen gewickelt. Hierbei wird der jeweils vorauslaufende bzw. vorauseilende Wickel an dem Objekt respektive dem Kabelbündel festgeklebt. Der sich anschließende Folgewickel wird nun auf den vorauslaufenden Wickel mit einer bestimmten Überlappung aufgeklebt. Um diese Überlappung vorzugeben, bzw. erfindungsgemäß definiert einzustellen, ist das Klebeband mit der als Positionierhilfe beim Bandagieren ausgebildeten Markierung ausgerüstet.

Tatsächlich wird man insgesamt so vorgehen, dass im Regelfall die Markierung an einer vom Objekt bzw. Kabelbündel abgewandten Außenseite des Klebebandes vorgesehen ist, so dass sie als die angesprochene Positionierhilfe für den Montagewerker fungiert und auch fungieren kann. Demgegenüber weist eine Innenseite des Klebebandes die Kleberbeschichtung auf, welche folglich dem Objekt zugewandt ist. Meistens wird sich der Montagewerker so anhand der Markierung orientieren, dass er den jeweiligen Folgewickel mit dem in Wickelrichtung hinteren Rand des Klebebandes entlang der als Positionierhilfe ausgebildeten Markierung führt.

Auf diese Weise wird nicht nur der Wickelvorgang als solcher vergleichmäßigt, weil die fragliche Positionierhilfe für den in Wickelrichtung hinteren Rand des Wickels bzw. Klebebandes zur Verfügung steht, sondern kann darüber hinaus der Grad der Überlappung zwischen dem vorauslaufenden Wickel und dem Folgewickel optimiert werden. Tatsächlich beobachtet man in der Praxis nämlich Überlappungsgrade, die im Regelfall deutlich größer sind, als dies erforderlich ist, um den notwendigen Schutz für die Kabelbündel und auch die anderen positiven Wirkungen beispielsweise im Hinblick auf die Geräuschdämpfung des solchermaßen ausgerüsteten Kabelsatzes realisieren zu können.

So wird meistens in der Praxis mit einem Überlappungsgrad von in etwa 50% oder sogar noch mehr gearbeitet. Das heißt, der Folgewickel überlappt mit in etwa der Hälfte der Breite des Klebebandes mit dem vorauslaufenden Wickel.

Erfindungsgemäß kann nun dieser Überlapp deutlich geringer eingestellt werden. Das wird derart umgesetzt, dass der Abstand der Markierung von einer überdeckten Kante 50% oder weniger der Breite des Trägers beträgt. Meistens kann sogar mit einem Abstand der Markierung von der fraglichen überdeckten Kante von 30% oder weniger gearbeitet werden. Das heißt, durch die als Positionierhilfe ausgelegte Markierung wird erfindungsgemäß nicht nur die Wicklung und folglich das Wickelergebnis vergleichmäßigt, sondern lässt sich mit einem Klebeband gleicher Länge wie beim Stand der Technik ein deutlich längerer Bereich an Kabelbündeln im Beispielfall umwickeln, so dass insgesamt der Materialverbrauch signifikant verringert wird.

Das führt dann natürlich auch zu geminderten Kosten. Tatsächlich werden Kosteneinsparungen von wenigstens 10%, typischerweise sogar von mehr als 20% beobachtet, weil die als Positionierhilfe ausgelegte Markierung nicht nur den Überlapp auf ein Minimum reduziert und zugleich den Wickelvorgang vergleichmäßigt, sondern hierdurch auch die Geschwindigkeit des Montagewerkers beim Wickelvorgang gesteigert wird. Hierin sind die wesentlichen Vorteile zu sehen.

Erfindungsgemäß ist der Träger vollflächig mit der Kleberbeschichtung ausgerüstet. Grundsätzlich kann aber auch mit einer Kleberbeschichtung gearbeitet werden, die auf den Träger als Streifen aufgebracht wird, solange gewährleistet ist, dass die einzelnen Wickel am Objekt respektive dem zu bandagierenden Kabelbündel festgeklebt werden. Das ist insofern von Bedeutung, als der Träger grundsätzlich jedweden denkbaren Aufbau aufweisen kann, nach vorteilhafter Ausgestaltung jedoch als textiler Träger aus zumindest einer Gewebeschicht und einer damit verbundenen Flächengebildeschicht aufgebaut ist. Bei der Flächengebildeschicht kann es sich um ein Gewirke oder auch ein Vlies oder sogar ein Velours handeln.

Jedenfalls zeichnet sich ein solcher Träger und ein damit ausgerüstetes Klebeband durch eine gleichzeitig gute mechanische Stabilität sowie hervorragende Geräuschdämpfung aus. Das setzt allerdings voraus, dass das Klebeband wie beschrieben am langgestreckten Objekt festgeklebt wird, damit die Flächengebildeschicht ihre geräuschdämpfende Wirkung entfalten kann. Das ist bei einer losen Umhüllung nach dem gattungsbildenden Stand der Technik entsprechend der DE 20 2010 016 142 U1 schon deshalb nicht möglich, weil hierbei zusätzlich noch eine Relativbewegung zwischen dem Klebeband und dem bandagierten Kabelbündel zugelassen wird.

Nach vorteilhafter Ausgestaltung ist der Träger an seiner dem Objekt zugewandten Innenseite mit der Kleberbeschichtung ausgerüstet. Demgegenüber verfügt seine vom Objekt abgewandte Außenseite über die bereits angesprochene und als Positionierhilfe beim Bandagieren fungierende Markierung. In diesem Zusammenhang ist die Markierung regelmäßig auf den Träger aufgebracht. Alternativ oder zusätzlich kann aber auch so vorgegangen werden, dass die Markierung in den Träger eingearbeitet ist. Handelt es sich bei dem Träger beispielsweise um einen Gewebeträger oder weist der Träger eine Gewebeschicht auf, so lässt sich die Markierung als gleichsam eingewebter Kettfaden oder durchgängiger Nähfaden in der Praxis umsetzen und realisieren.

Dabei wird man insgesamt und im Allgemeinen so vorgehen, dass die Markierung als Farbmarke ausgebildet ist und eine von einer Trägerfarbe abweichende Farbgebung, insbesondere eine kontrastierende Farbgebung, aufweist. Besitzt der Träger beispielsweise eine schwarze Farbe, so kann die Markierung als Farbmarke mit kontrastierender Farbgebung ausgelegt werden, beispielsweise als roter Kettfaden im Beispielfall eines Gewebeträgers bzw. einer Gewebeschicht.

Neben einer solchen optischen Auslegung der Markierung ist es alternativ oder zusätzlich auch möglich, dass die Markierung als haptische Marke ausgebildet ist. In diesem Fall spricht die Markierung (zusätzlich) noch das Berührempfinden des Montagewerkers an. Zu diesem Zweck besitzt die realisierte haptische Marke typischerweise eine von einer Oberflächenbeschaffenheit des Trägers abweichende Haptik. Das kann im einfachsten Fall so umgesetzt werden, dass die Markierung als Erhebung, Noppen etc. im Vergleich zum Träger erscheint.

Im Falle des bereits angesprochenen Kettfadens lassen sich beide Maßnahmen zur Umsetzung der Markierung auch auf einfache Art und Weise kombinieren. Denn der Kettfaden kann mit einer kontrastierenden Farbe im Vergleich zu den übrigen Gewebefäden ausgelegt werden. Außerdem ist es denkbar, dass der Kettfaden beispielsweise einen größeren oder kleineren Durchmesser als die übrigen Kettfäden aufweist, so dass in seiner Längserstreckung von dem Montagewerker eine Abweichung in der Oberflächenbeschaffenheit beobachtet wird, folglich die Markierung zugleich als haptische Marke ausgebildet ist.

Darüber hinaus schlägt die Erfindung vor, dass die Markierung als durchgängige oder unterbrochene Abstandsmarkierung ausgebildet ist. Das heißt, die Markierung kann sowohl linienförmig als auch punktförmig ausgelegt sein. Selbstverständlich sind auch Kombinationen denkbar und werden von der Erfindung umfasst. Die Abstandsmarkierung ist dabei mit vorgegebenem Abstand von der durch den Folgewickel überdeckten Kante auf den Träger aufgebracht und/oder in den Träger eingebracht. Bei dieser überdeckten Kante handelt es sich um den jeweils in Wickelrichtung hinteren Rand des wendeiförmig um das langgestreckte Objekt bzw. Kabelbündel herumgewickelten Klebebandes.

Dabei wird man meistens so vorgehen, dass der fragliche Abstand der Markierung von der überdeckten Kante weniger als 50% der Breite des Trägers und insbesondere weniger als 30% der Breite des Trägers beträgt, wie dies einleitend bereits beschrieben worden ist. Dadurch lässt sich insgesamt der Materialverbrauch an Klebeband pro Längeneinheit des zu bandagierenden langgestreckten Objektes signifikant gegenüber bisherigen Vorgehensweisen verringern. Dadurch sinken gleichzeitig die Herstellungskosten.

Die Markierung kann entweder im Zuge der Herstellung des Trägers in oder auf diesen aufgebracht werden, wie dies zuvor mit dem Beispiel des farbigen Kettfadens erläutert worden ist. Es ist aber auch möglich, die Markierung nachträglich auf den bereits fertig konfektionierten Träger aufzubringen. Das kann vor oder nach oder auch gleichzeitig mit dem Aufbringen der Kleberbeschichtung erfolgen. Als denkbare Techniken zum Aufbringen der Markierung empfiehlt die Erfindung beispielhaft und nicht einschränkend ein Aufdrucken der Markierung, ein Aufprägen der Markierung, ein Aufnähen, Aufkleben, Aufsprühen, Aufrollen oder sogar auch ein Auflasern. Selbstverständlich sind auch Kombinationen der zuvor angesprochenen Techniken möglich und werden von der Erfindung umfasst.

Mit dem Aufdrucken, Aufsprühen oder Aufrollen wird üblicherweise eine kontrastierende Farbgebung im Vergleich zur Trägerfarbe im Bereich der Markierung realisiert, indem die gewünschte Farbe auf den Träger aufgebracht wird. Mit dem Aufkleben kann beispielsweise ein Kunststoffstreifen als Markierung auf den Träger aufgebracht werden. Durch Aufnähen lässt sich ebenfalls ein Streifen oder auch ein farblich abgesetzter Faden auf den Träger aufbringen oder sogar in diesen einweben.

Die Methode des Aufprägens verändert im Regelfall die Haptik des Trägers im Bereich von solchermaßen realisierten Prägeflächen, so dass dadurch eine haptische Marke auf dem Träger definiert werden kann. Mithilfe des Auflaserns oder vergleichbarer strukturverändernder Techniken ist es alternativ oder zusätzlich möglich, den Träger beispielsweise mit dem darüber geführten Laserstrahl auf- oder anzuschmelzen. Auch eine Änderung der Farbgebung kann auf diese Weise realisiert werden, so dass hierdurch je nach Auslegung sowohl eine Farbmarke als auch eine haptische Marke oder beides umgesetzt werden können.

Wie bereits erläutert, ist der Träger insgesamt als textiles Flächengebilde ausgelegt. Dabei kann der Träger aus beispielsweise einem Vlies, einem Gewebe, einem Gewirke oder auch einem Velours aufgebaut sein. Selbstverständlich werden auch Kombinationen umfasst, wie das zuvor bereits beschriebene Laminat basierend auf der Flächengebildeschicht und der Gewebeschicht. Ebenso kann der Träger auch als Folie ausgebildet werden.

Im Ergebnis wird ein Klebeband zur Verfügung gestellt, welches sich besonders als Wickelband zum Bandagieren langgestreckter Objekte eignet und in diesem Kontext zum Bandagieren von Kabelbündeln in Automobilen besonders prädestiniert ist. Das auf diese Weise realisierte und mit dem betreffenden Klebeband umwickelte Kabelbündel lässt sich mit im Vergleich zum Stand der Technik deutlich geringeren Herstellungskosten realisieren.

Tatsächlich ist zu diesem Zweck das Klebeband mit der als Positionierhilfe beim Bandagieren ausgebildeten Markierung ausgerüstet, welche den Wickelvorgang beschleunigt und vergleichmäßigt sowie den Überlapp bzw. die Überlappung zwischen dem vorauslaufenden Wickel und dem darauf aufgeklebten Folgewickel minimiert. Dadurch wird der Wickelvorgang beschleunigt und zugleich der Materialverbrauch verringert. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: ein mit einem erfindungsgemäßen Klebeband umwickeltes Kabelbündel,
- Fig. 2: das erfindungsgemäße Klebeband in ausgestrecktem Zustand sowie in Aufsicht und
- Fig. 3: einen Schnitt x-x durch das Klebeband nach Fig. 2.

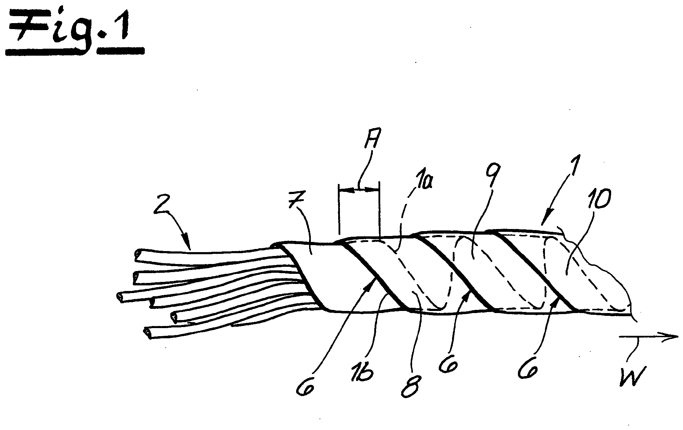

In der Fig. 1 ist ein mit einem Klebeband 1 umwickeltes Kabelbündel 2 dargestellt. Das Kabelbündel 2 setzt sich aus mehreren in Längsrichtung miteinander zusammenzufassenden Kabeln zusammen. Auf diese Weise wird insgesamt ein Kabelsatz hergestellt, der typischerweise in Automobilen eingesetzt wird und Verwendung findet. Anstelle des Kabelbündels 2 können mithilfe des erfindungsgemäßen Klebebandes 1 grundsätzlich auch andere langgestreckte Objekte 2 bandagiert werden. Das ist jedoch im Detail nicht gezeigt.

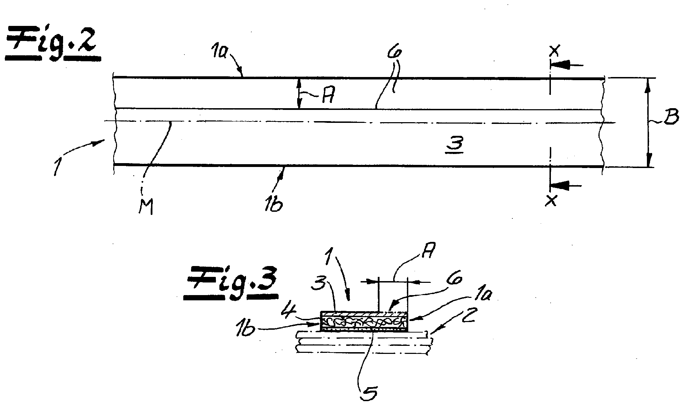

Das erfindungsgemäße Klebeband 1 verfügt ausweislich der Schnittdarstellung in Fig. 3 über einen Träger 3, 4 sowie eine Kleberbeschichtung 5. Der Träger 3, 4 setzt sich aus einer Gewebeschicht 3 sowie einer damit verbundenen Flächengebildeschicht 4 zusammen. Bei der Flächengebildeschicht 4 kann es sich um ein Vlies, ein Velours aber auch um eine andere geräuschdämpfende Schicht wie beispielsweise eine Schaumstoffschicht handeln.

Im Ausführungsbeispiel ist die Kleberbeschichtung 5 einseitig auf den Träger 3, 4 aufgebracht, und zwar vollflächig. Grundsätzlich kann die Kleberbeschichtung 5 aber auch als Streifenbeschichtung ausgebildet sein, wie dies einleitend bereits beschrieben wurde. Schlussendlich ist der Träger 3, 4 noch mit einer Markierung 6 ausgerüstet.

Man erkennt, dass der Träger 3, 4 an seiner dem Objekt 2 zugewandten Innenseite die Kleberbeschichtung 5 aufweist. Demgegenüber ist die vom Objekt 2 abgewandte Außenseite des Trägers 3, 4 mit der bereits angesprochenen Markierung 6 ausgerüstet. Bei der Markierung 6 handelt es sich im Beispielfall und ausweislich der Fig. 2 um eine durchgängige Abstandsmarkierung.

Tatsächlich weist die Markierung 6 einen vorgegebenen Abstand A von einem Rand 1a des Klebebandes 1 auf. Neben diesem Rand bzw. Längsrand 1a verfügt das Klebeband 1 aufgrund seines längserstreckten Charakters über einen weiteren gegenüberliegenden Rand 1b bzw. Längsrand 1b. Außerdem erkennt man noch eine Mittellinie M, welche das Klebeband 1 in der Längsrichtung in zwei gleichbreite Abschnitte unterteilt.

Bei dem Längsrand 1a des Klebebandes 1 handelt es sich um eine Kante 1a des Klebebandes 1, die beim wendeiförmigen Wickeln des Klebebandes 1 auf das längserstreckte Objekt 2 jeweils überdeckt wird und aus diesem Grund in der Fig. 1 gestrichelt dargestellt ist. Tatsächlich erkennt man in der Fig. 1 mehrere Wickel, 7, 8, 9, 10.

Tatsächlich handelt es sich bei dem Wickel 7 um einen vorauseilenden Wickel 7 der mithilfe des Klebebandes 1 realisierten Umwicklung bzw. Bandage. Demgegenüber fungiert der zweite anschließende Wickel 8 als Folgewickel 8 und wird auf den vorauslaufenden Wickel 7 mit einem Überlapp bzw. einer Überlappung A aufgeklebt. Dieser Überlapp A entspricht erfindungsgemäß dem Abstand A der Markierung respektive Abstandsmarkierung 6 von der durch den Folgewickel 8 überdeckten Kante 1a des Klebebandes 1.

Betrachtet man den weiteren Verlauf der Umwicklung bzw. der solchermaßen realisierten Bandage des langgestreckten Objektes respektive Kabelbündels 2 im Beispielfall, so wird deutlich, dass sämtliche weiteren Wickel 9, 10 vergleichbar auf das Kabelbündel bzw. langgestreckte Objekt 2 aufgebracht werden. Tatsächlich fungiert der Folgewickel 8 als vorauseilender Wickel 8 mit Bezug zum daran anschließenden Folgewickel 9. Der Folgewickel 9 ist wiederum als vorauseilender Wickel 9 in Bezug auf den weiteren nachfolgenden Folgewickel 10 zu betrachten. In diesen sämtlichen Fällen wird insgesamt so vorgegangen, dass auf den jeweils am Objekt 2 festgeklebten vorauseilenden Wickel 7 bzw. 8, 9 der Folgewickel 8 bzw. 9, 10 unter Berücksichtigung des Überlapps bzw. der Überlappung A aufgeklebt wird.

Dieser Überlapp A wird mithilfe der Markierung 6 vorgegeben. Denn die Markierung 6 ist als Positionierhilfe beim beschriebenen Bandagieren ausgebildet. Das geschieht derart, dass der Folgewickel 8 bzw. 9, 10 mit jeweils durch die als Positionierhilfe ausgelegte Markierung 6 vorgegebener Überlappung A auf den jeweils am Objekt 2 festgeklebten vorauseilenden Wickel 7 bzw. 8, 9 aufgeklebt wird.

Die Markierung 6 kann insgesamt als Farbmarke ausgebildet sein und über eine von einer Trägerfarbe abweichende Farbgebung und insbesondere kontrastierende Farbgebung verfügen. Tatsächlich weist der Träger 3, 4 typischerweise eine durchgängige Farbgebung, beispielsweise schwarz, auf.

Die Markierung 6 verfügt nun als Farbmarke über eine kontrastierende Farbgebung, beispielsweise rot.

Alternativ oder zusätzlich kann die Markierung 6 aber auch als haptische Marke ausgebildet sein. In diesem Fall weist der Träger 3, 4 im Bereich der Markierung 6 eine andere Oberflächenbeschaffenheit als an seiner übrigen Oberfläche auf. Diese geänderte Oberflächenbeschaffenheit kann beispielsweise so realisiert und umgesetzt werden, dass die in diesem Fall an der Außenseite des Klebebandes 1 vorgesehene Gewebeschicht 3 mit einem Laser in Längsrichtung bestrahlt wird (vgl. Fig. 3). Dadurch lässt sich die Gewebeschicht 3 im Beispielfall entlang des Laserstrahls aufschmelzen und/oder die Farbgebung des Trägers 3, 4 und vorliegend der Gewebeschicht 3 verändern.

In jedem Fall wird auf diese Weise die Markierung 6 als Abstandsmarkierung definiert und kann beim in der Fig. 1 am Endprodukt dargestellten Wickelvorgang von dem Montagewerker als Positionierhilfe genutzt werden. Tatsächlich wird der Montagewerker hier so vorgehen, dass er den in Wickelrichtung W hinteren Rand 1b des Klebebandes 1 entlang der Markierung 6 führt. Dadurch wird automatisch der in Wickelrichtung W vordere Rand 1a des Klebebandes 1 unter Berücksichtigung des Überlapps A überdeckt und definiert die durch den jeweiligen Folgewickel 8 bzw. 9, 10 überdeckte Kante 1a. Der Überlapp A beträgt dabei im Beispielfall 30% oder weniger einer Breite B des Trägers 3, 4. Das wird anhand der ausgestreckten Darstellung in der Fig. 2 deutlich.

Nicht dargestellt ist die Möglichkeit, die Markierung 6 insgesamt in den Träger 3, 4 einzuarbeiten bzw. die Markierung 6 zusammen mit der Herstellung des Trägers 3, 4 zu realisieren. Tatsächlich wird man meistens so vorgehen, dass der Träger 3, 4 zunächst vorkonfektioniert und beispielsweise mit der Kleberbeschichtung 5 vorher oder nachher ausgerüstet wird. Auf diesen vorkonfektionierten Träger 3, 4 wird dann die Markierung 6 aufgebracht.

## Patentansprüche

1. Kombination aus einem Klebeband zum Bandagieren langgestreckter Objekte (2) und dem betreffenden Objekt (2), wobei das Klebeband mit einem Träger (3, 4), ferner mit einer ein- oder beidseitig aufgebrachten Kleberbeschichtung (5), und mit einer Markierung (6) ausgerüstet ist, **dadurch gekennzeichnet, dass**
die Markierung (6) als Positionierhilfe beim Bandagieren ausgebildet ist, und zwar derart, dass auf einen jeweils am Objekt (2) festgeklebten vorauseilenden Wickel (7 bzw. 8, 9) ein Folgewickel (8 bzw. 9, 10) mit durch die Positionierhilfe (6) vorgegebener Überlappung (A) aufgeklebt wird, wobei
der Träger (3, 4) vollflächig mit der Kleberbeschichtung (5) ausgerüstet ist oder
die Kleberbeschichtung (5) als Streifen auf den Träger (3, 4) aufgebracht wird, solange gewährleistet ist, dass die einzelnen Wickel (7 bzw. 8, 9, 10) am Objekt (2) festgeklebt werden.

2. Kombination nach Anspruch 1, **dadurch gekennzeichnet, dass** der Träger (3, 4) an seiner dem Objekt (2) zugewandten Innenseite mit der Kleberbeschichtung (5) und an seiner vom Objekt (2) abgewandten Außenseite mit der Markierung (6) ausgerüstet ist.

3. Kombination nach Anspruch 1 oder 2, **dadurch gekennzeichnet, dass** die Markierung (6) in den Träger (3, 4) eingearbeitet ist, beispielsweise als durchgängiger Nähfaden, und/oder auf den Träger (3, 4) aufgebracht ist.

4. Kombination nach einem der Ansprüche 1 bis 3 **dadurch gekennzeichnet, dass** die Markierung (6) als Farbmarke ausgebildet ist und eine von der Trägerfarbe abweichende Farbgebung, insbesondere eine kontrastierende Farbgebung aufweist.

5. Kombination nach einem der Ansprüche 1 bis 4 **dadurch gekennzeichnet, dass** die Markierung (6) als haptische Marke ausgebildet ist und eine von einer Oberflächenbeschaffenheit des Trägers (3, 4) abweichende Haptik aufweist.

6. Kombination nach einem der Ansprüche 1 bis 5 **dadurch gekennzeichnet, dass** die Markierung (6) als durchgängige oder unterbrochene Abstandsmarkierung (6) ausgebildet ist, welche mit vorgegebenem Abstand (A) von einer durch den Folgewickel (8 bzw. 9, 10) überdeckten Kante (1a) auf und/oder in den Träger (3, 4) auf- bzw. eingebracht ist.

7. Kombination nach Anspruch 6 **dadurch gekennzeichnet, dass** der Abstand (A) der Markierung (6) von der überdeckten Kante (1a) 50% oder weniger, insbesondere 30 % oder weniger, der Breite (B) des Trägers (3, 4) beträgt.

8. Kombination nach einem der Ansprüche 1 bis 2. 7 **dadurch gekennzeichnet, dass** die Markierung (6) auf den Träger (3, 4) durch Aufdrucken, Aufprägen, Aufnähen, Aufkleben, Auflasern, Aufsprühen oder Aufrollen sowie Kombinationen aufgebracht wird.

9. Kombination nach einem der Ansprüche 1 bis 8, **dadurch gekennzeichnet, dass** der Träger (3, 4) als textiles Flächengebilde aus beispielsweise einem Vlies, Gewebe, Gewirke, Velours sowie Kombinationen oder als Folie ausgebildet ist.

## Claims

1. Combination of an adhesive tape for wrapping elongate objects (2) and the object (2) concerned, wherein the adhesive tape with a support (3, 4) is further equipped with an adhesive coating (5) applied to one side or both sides, and a marking (6),
**characterized in that**
the marking (6) is designed as a positioning aid during wrapping, and particularly in such a way that a following wrap (8 or 9, 10) is glued with a predetermined overlap (A) defined by the positioning aid (6) onto each preceding wrap (7 or 8, 9) which is glued fixedly to the object (2),
wherein
the support (3, 4) is furnished with the adhesive coating (5) over the entire surface thereof, or
the adhesive coating (5) is applied to the support (3, 4) in the form of a strip, provided it is ensured that the individual wraps (7 or 8, 9, 10) are glued fixedly to the object (2).

2. Combination according to Claim 1, **characterized in that** the support (3, 4) is furnished with the adhesive coating (5) over the inner side thereof, which faces the object (2) and is furnished with the marking (6) on the outer side thereof, which faces away from the object (2) .

3. Combination according to Claim 1 or 2, **characterized in that** the marking (6) is incorporated in the support (3, 4), for example as a continuous sewing thread, and/or is applied to the support (3, 4).

4. Combination according to any one of Claims 1 to 3, **characterized in that** the marking (6) is embodied as a colour mark and has a colour scheme which differs from the support colour, in particular a colour scheme which contrasts with the support colour.

5. Combination according to any one of Claims 1 to 4, **characterized in that** the marking (6) is embodied as a haptic mark and has a feel which differs from the surface texture of the support (3, 4).

6. Combination according to any one of Claims 1 to 5, **characterized in that** the marking (6) is embodied as a continuous or discontinuous distance mark (6) which is and/or applied to or incorporated in the support (3, 4) at a predetermined distance (A) from an edge (1a) which is covered by the following wrap (8 or 9, 10).

7. Combination according to Claim 6, **characterized in that** the distance (A) between the marking (6) and the covered edge (1a) is equal to 50 % or less, in particular 30 % or less than the width (B) of the support (3, 4).

8. Combination according to any one of Claims 1 to 7, **characterized in that** the marking (6) is applied to the support (3, 4) by imprinting, embossing, stitching, gluing, laser, spraying or rolling, or combinations thereof.

9. Combination according to any one of Claims 1 to 8, **characterized in that** the support (3, 4) is embodied as a textile surface structure made from, for example, a nonwoven, a woven fabric, a knitted fabric, velours and combinations thereof, or as a film.

## Revendications

1. Combinaison composée d'une bande adhésive pour bandager des objets allongés (2) et de l'objet concerné (2), sachant que la bande adhésive est dotée d'un support (3, 4), en plus d'un revêtement adhésif (5) appliqué d'un ou des deux côtés et d'un marquage (6), **caractérisée en ce que**
le marquage (6) est constitué comme une aide de positionnement lors de l'opération de bandage et à savoir de telle manière qu'un enroulement suivant (8 ou 9, 10) avec un chevauchement (A) prédéfini par l'aide de positionnement (6) est collé sur un enroulement (7 ou 8, 9) précédent fermement collé respectivement à l'objet (2),
sachant que
le support (3, 4) est doté sur toute la surface du revêtement adhésif (5), ou
le revêtement adhésif (5) est appliqué sous forme de bande sur le support (3, 4) aussi longtemps qu'il est assuré que les enroulements (7 ou 8, 9, 10) individuels sont fermement collés à l'objet (2).

2. Combinaison selon la revendication 1, **caractérisée en ce que** le support (3, 4) est doté du revêtement adhésif (5) sur son côté intérieur tourné vers l'objet (2) et du marquage (6) sur son côté extérieur opposé à l'objet (2) .

3. Combinaison selon la revendication 1 ou 2, **caractérisée en ce que** le marquage (6) est incorporé dans le support (3, 4), par exemple sous la forme de fil à coudre continu, et/ou est appliqué sur le support (3, 4).

4. Combinaison selon l'une quelconque des revendications 1 à 3, **caractérisée en ce que** le marquage (6) est constitué sous la forme d'une marque de couleur et comporte une coloration s'écartant de la couleur du support, en particulier une coloration contrastante.

5. Combinaison selon l'une quelconque des revendications 1 à 4, **caractérisée en ce que** le marquage (6) est constitué sous la forme d'une marqué haptique et comporte une haptique s'écartant de la nature de surface du support (3, 4).

6. Combinaison selon l'une quelconque des revendications 1 à 5, **caractérisée en ce que** le marquage (6) est constitué sous la forme de marquage d'espacement (6) continu ou interrompu, lequel est appliqué ou incorporé sur et/ou dans le support (3, 4) à une distance (A) prédéfinie d'un bord (1a) recouvert par l'enroulement suivant (8 ou 9, 10).

7. Combinaison selon la revendication 6, **caractérisée en ce que** l'intervalle (A) entre le marquage (6) et le bord recouvert (1a) est 50 % ou moins de la largeur (B) du support (3, 4).

8. Combinaison selon l'une quelconque des revendications 1 à 7, **caractérisée en ce que** le marquage (6) est appliqué sur le support (3, 4) par impression, empreinte, couture, collage, marquage au laser, pulvérisation ou roulement ainsi que par des combinaisons.

9. Combinaison selon l'une quelconque des revendications 1 à 8, **caractérisée en ce que** le support (3, 4) est constitué sous la forme d'une structure de surface textile à partir par exemple d'un matériau non-tissé, d'un tissu, d'un matériau maillé, de velours ainsi que de combinaisons ou sous la forme d'une film.
